# EUROPEAN PATENT SPECIFICATION

(11) **EP 0 855 299 B1**
(45) Date of publication and mention of the grant of the patent: **18.10.2000**
(21) Application number: 98103939.9
(22) Date of filing: 06.04.1995
(51) Int. Cl.: B60H 1/00, H01R 13/00, H02J 7/00

(54) **A multi-facility connection arrangement**
Anlage mit mehreren Verbindungen
Dispositif de raccordementà plusieurs installations

(30) Priority: 08.04.1994 SE 9401182
(43) Date of publication of application: 29.07.1998
(62) Divisional of application: 95916079.7
(73) Proprietor: UWE-VERKEN AB, S-601 04 Norrköping (SE)
(72) Inventor: Mardh, Bengt, S-601 04 Norrköping (SE); Hakansson, Sören, S-601 04 Norrköping (SE)
(74) Representative: Willquist, Bo

(56) References cited:
- EP-A- 0 398 030
- US-A- 4 624 472
- US-A- 5 462 439

## Description

The present invention relates to a multi-facility connection arrangement which is intended to connect such facilities as the heating system of parked lorries, trucks and private vehicles, and then particularly, but not exclusively, buses that are equipped with an individual pressure system and an individual heating circuit or circuits, and possibly also with an individual heat exchanger for water-carried heat, to corresponding facilities on a stationary plant, or on a so-called heating ramp which includes a hot water or hot liquid source, an individual source of electric current and an individual source of compressed air, wherein the different ramp-carried sources or facilities can be connected temporarily by means of pipes and conductors to corresponding vehicle-carried pipes and conductors for the purpose of at least pre-heating the vehicle interior or/and other vehicle spaces, and possibly also to recharge the vehicle battery or batteries, and wherein the heating-ramp carried pipes and conductors extending from the aforesaid supply sources are connectable to a vehicle-mounted terminal unit which is connected permanently to at least the heating-medium supply and return lines of the vehicle and to the individual compressed air system of said vehicle.

Parking heating systems of the aforedescribed kind are well known in the art and have been developed by Applicant, among others.

An object of the present invention is to optimize the practical use of the system and to enable the ramp-carried liquid, pressure and electrical sources to improve the security of the connection to the corresponding vehicle-mounted systems, to enable the connections required to be effected more simply with fewer manual manipulations, and to provide a more economic system, among other things with regard to energy costs.

Another object of the invention is to enable the components involved to be serviced more readily, therewith reducing service and maintenance costs.

The aforesaid objects are achieved with a multi-connection arrangement having the characteristic features set forth in the characterizing clause of Claim 1. The depending Claims set forth advantageous embodiments of the inventive concept.

The invention will now be described in more detail with reference to an exemplifying embodiment thereof and also with reference to the accompanying drawings, in which
- Fig. 1: illustrates an embodiment of the present invention applied to a bus or coach, wherein the Figure illustrates schematically the primary parts of the invention, namely the terminal connector device and the terminal box which coacts with the terminal connector device when the vehicle is stationary;
- Fig. 2: is a broken view from above which shows the terminal connector device inserted into the terminal box although not fully connected thereto;
- Fig. 2A: is a side view of the arrangement shown in Fig. 2;
- Fig. 3: is a horizontal sectional view of the terminal connector device when fully connected to the terminal box;
- Fig. 4: is a view from above of the terminal connector device and its pivotal engagement means; and
- Fig. 5: is an electric signal flowsheet and also illustrates schematically the electrical coaction achieved when the terminal connector device is inserted in the terminal box.

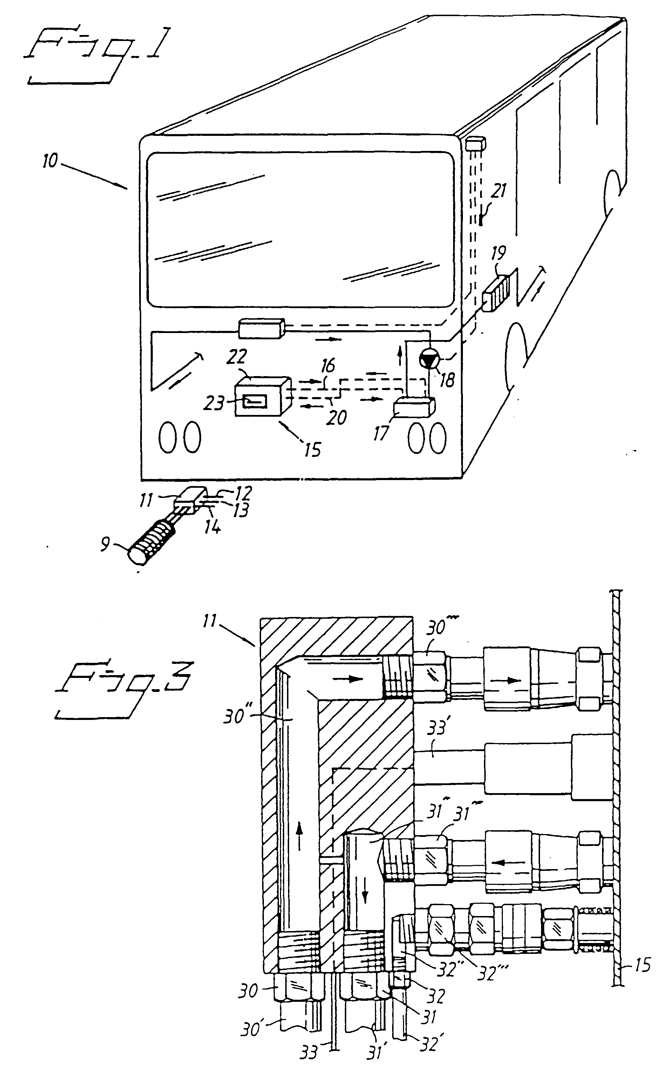

Fig. 1 illustrates the principle function of the inventive arrangement. In the case of the illustrated embodiment, the inventive concept is applied to a bus, or coach, referenced 10. The bus 10 is assumed to be parked on a heating ramp of known construction (not shown), i.e. an area on which a relatively large number of buses can be parked, these buses being equipped with one or more circuits for water-carried or liquid-carried heat, in a known manner. It is known to provide such heating ramps with means (hot water, compressed air, electrical connections) by means of which a bus parked on the heating ramp can be connected to the various pipes and conductors on the heating ramp prior to a bus being taken into use, and therewith supplying the bus with hot liquid and electric current from the ramp, so as to at least heat the bus basically. In many cases, the battery or batteries of the bus will require recharging, which is effected by connecting the vehicle battery electrically to a battery charger, for instance mounted on the ramp.

As indicated in the introduction, the primary object of the present invention is to
a) simplify connection of the various sources between vehicle and heating ramp, i.e. to eliminate manual manipulations to the greatest possible extent, and to concentrate the different desired functions or facilities at one single location; and
b) optimize the arrangement by providing further functions and advantages with the aid of simple means which will eliminate the possibility of human error to a high degree.

As will be seen from Fig. 1, the bus 10 is equipped with a vehicle-stationary terminal box 15 (described in more detail further on), whose one side wall is connected to the vehicle-carried heating circuit or circuits 19 through the medium of connections herefor. In this regard, a supply line 16 supplies the heating circuit with hot liquid or hot water delivered from the heating ramp, through the medium of a heat exchanger 17 and a circulation pump 18. When the liquid or water has passed through all heating circuits 19 in the vehicle 10, the liquid or water returns to the heat exchanger 17. The arrangement also includes a temperature sensor 21 which functions to indicate when the vehicle interior has reached a desired temperature and the bus is ready to be taken into use. The earlier mentioned connected lines leading from the heating ramp are then disconnected. Such ramp connections are shown symbolically at 9.

The aforedescribed technique is known to the art.

The terminal connector device 11 and the vehicle-mounted terminal box 15 will now be described in detail. In conjunction with this description, there will also be given an account of the improved functions that are achieved and also optimization of the inventive arrangement and the advantages afforded thereby over known techniques.

### The terminal connector device 11

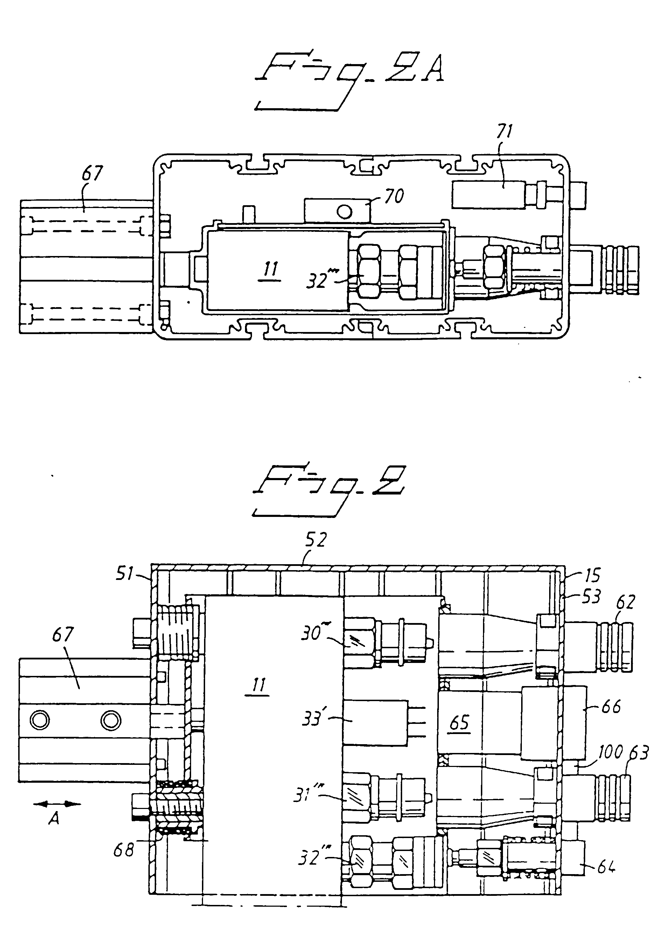

Fig. 2 shows the terminal connector device 11 inserted in the terminal box 15, with the terminal connector in an inactive position. Figs. 3 and 4 show respectively a horizontal section view and a view from above. The terminal connector 11 has a rectangular shape and includes on one short side a connection 30 for connection with a supply hose 30' extending from a ramp-mounted liquid source (not shown), a connection 31 for connection of a return line 31', a connection 32 for connection of a compressed air hose 32' extending from the ramp. A connection 33 through which current is supplied from a ramp-carried current source (not shown) is also mounted on this short side of the terminal connector 11.

As will be seen in particular from Fig. 3, respective connections 30, 31 and 32 are actively connected with passageways 30", 31'' and 32'' passing through the terminal connector 11. Each of these passageways 30", 31'' and 32'' open out into an opening in one long side of the terminal connector, and each of said openings have connecting means 30''', 31''' and 32'''. The power supply cable 33 is connected to an electric male contact 33' by means of electric conductors (indicated with a broken line). All of the aforesaid components, with the exception of the passageways 30", 31'' 32", are also shown in Fig. 4, to which reference is now made. The feature of interest shown in Fig. 4 resides in an actuator device 41 which is located on the upper side of the terminal connector device 11 and which is pivotal about an axle 40. The actuator device has a special configuration and is mounted close to the connection end of the terminal connector device 11 and includes an outwardly projecting, manually operable handle 42.

Reference is now made again to Fig. 2, and later also to Fig. 3 and to the vehicle-mounted terminal box 15 indicated in Fig. 3.

The terminal box 15 has a bottom part (not shown), at least three side walls 51, 52 and 53, and a top part (not shown). The fourth side may be open, either completely or partially, and is intended to receive the terminal connector device 11, which will be described more fully in the following description of the manner in which the inventive arrangement operates.

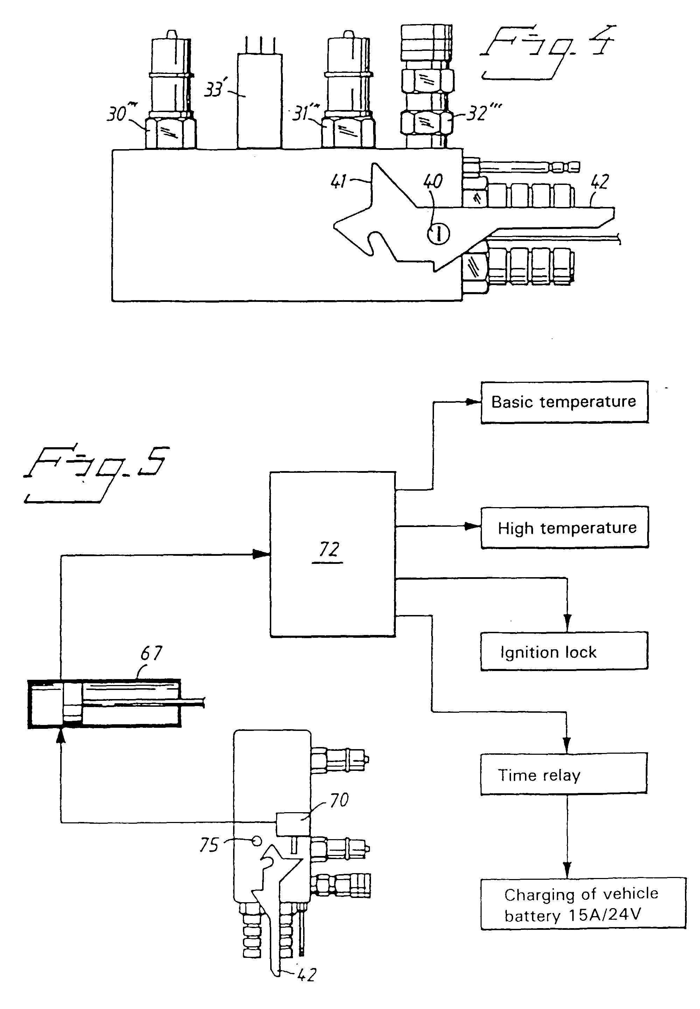

Mounted inside the vehicle-mounted terminal box 15 is a microswitch 70 (indicated in Fig. 5) which is connected electrically to a box 72 (Fig. 5) which houses a plurality of electrical components. The box 72 may be positioned, and is preferably positioned, somewhere outside the terminal box 15. The inventive arrangement will now be described in more detail with reference to Fig. 2, from which it will be seen that the terminal box 15 has a side wall, in this case the wall 53, that is accessible externally. Extending through the wall 53 are connection means 62, 63 and 64 which can be connected to corresponding connection means on the terminal connector device 11, such that the connecting means 30''' on the terminal connector device 11 can be connected sealingly (liquid-tight) to the connecting means 62 on the terminal box 15, and so that the connecting means 31''' can be sealingly connected (liquid-tight) to the connecting means 63 on the terminal box 15, and so that the air supply 32''' can be connected to the connecting means 64 on said terminal box 15. The side wall 53 of the terminal box 15 also carries an electrical contact 65 to which the electrical contact part 33' of the terminal connector device 11 is connected. The electrical contact 65 is connected by cables (not shown) to an externally accessible electric current supply device 66. All connecting means 62, 63, 64, 66 are connected permanently to corresponding lines in the bus 10. The compressed air system of the bus 10 is connected to a compressed air connection 100.

The wall 51 of the terminal box 15 opposite the wall 53 has mounted thereon a pull-spring loaded, pneumatic double-acting piston/cylinder device 67 which is activated by electric control signals and the piston of which is reciprocatingly movable in the direction of the arrow A. The piston/cylinder device is adapted to exert a force on the connected device 11 for movement of the device in one direction (to the right in Fig. 2). The piston/cylinder device 67 is acted upon by a pressure spring 68 on both sides of said device. Each of the pressure springs 68 (of which the lower is shown in Fig. 2) is mounted on a respective push sleeve. The piston-end of the piston/cylinder device is oriented so that it is able to exert a force on one wall of the terminal connector device 11, i.e. the wall opposite the connecting means 30''', 31''', etc.

### The modus operandi of the inventive arrangement

The manner in which the aforedescribed arrangement works will now be described in detail.

When a bus or coach 10 parked on a heating ramp/hard standing needs to be maintained at a given interior temperature and the batteries require recharging, the ramp-mounted lines and conductors are connected to the terminal connector device 11. The terminal connector device 11 is then inserted into the terminal box 15, wherewith the activator 41 mounted on the terminal connector device 11 activates a microswitch 70 (indicated in Fig. 2A) which then delivers a control signal from the vehicle electrical system to a solenoid valve 71, which is therewith switched to a different state which results in a change in pressure in the piston/cylinder device 67 by virtue of air entering from the air line 100, therewith initiating movement of the piston. As the terminal connector device is inserted into the terminal block, a notch or like recess on the activator 41 is brought into locking engagement with a pin 75 (Fig. 5). The activator 41 therewith prevents the connection with the microswitch 70 being broken unintentionally. The piston of the piston/cylinder device 67 is then pressed by the pressure spring 68 against the terminal connector device 11, therewith moving the terminal connector device in a direction towards the wall 53 of the terminal box 15. The various connection means 30''', 31''', 32''' and 33' on the terminal connector device 11 are therewith brought into active cooperation with corresponding connecting means on the wall 53 of the terminal box 15. As the electrical connection between connecting means 33 and 33' is established, there will preferably be a given delay in order to avoid unfavourable, and in certain cases dangerous sparking between the male and female electrical contacts. As will be understood, an incomplete connection between the male and female contacts may result in the generation of sparks in the worst case, therewith igniting inflammable or explosive vapours, or creating a difficultly released connection between the male and female contacts in the manner of a spot weld. The piston of the piston/cylinder device 67 bears against the side of the terminal connector device 11 with a constant force, so as to ensure that the desired contact between the various connecting means of the terminal connector device and the terminal box will be achieved. The liquid source and the electric current source on the heating ramp are now connected actively with the internal system of the bus and at least the primary heating of the bus and charging of the battery or batteries thereof can now take place.

As before mentioned, the microswitch 70 is intended primarily to activate movement of the piston/cylinder device 67, although the microswitch is also intended to coact with an electric terminal 72 (Fig. 5) which, in the illustrated embodiment, is constructed to deliver a plurality of desired control signals, of which some are indicated in Fig. 5. Thus, a first function of the arrangement may be to control a basic vehicle temperature, e.g. a basic temperature of 12°C. A second function may be to control a high vehicle temperature, for instance a temperature of 18°C. A third function may be to control an ignition lock which will prevent the vehicle from being started unintentionally while the vehicle is connected to the ramp-mounted supply facilities. A fourth function may include a time relay which controls charging of the vehicle battery or batteries. Those skilled in this art will understand that other functions and facilities are also possible.

When the vehicle has been heated to the temperature desired and the battery or batteries has/have been charged for instance, the handle, or thumb grip 42, on the activator 41 is moved so that the microswitch will break the supply of current to the solenoid valve, which is therewith opened and causes the piston of the piston/cylinder device 67 to return to its starting position against the force of the spring 68, whereafter the terminal connector device 11 can be removed from the terminal box 15.

The pressure springs 68 also have a secondary function. For instance, in the event of malfunctioning of the compressed air supply means, the pressure springs will function to maintain the active engagement of the terminal connector device 11 with the vehicle-mounted system. This prevents the uncontrolled release of liquids and fluids.

Although only one piston/cylinder device 67 has been shown, it will be understood that the arrangement may include two such devices, so as to obtain a balanced movement of the terminal connector device. It will be obvious to the skilled person that the electric terminal box 72 may include more or fewer functions than those shown and described.

The described and illustrated inventive arrangement enables the different supply sources mounted on the heating ramp to be connected to the internal systems of the vehicle and the coupling device 11 used to this end disconnected from the vehicle internal systems by means of a simple hand manipulation.

The energy costs entailed by the facilities installed on the vehicle can be optimized by appropriate choice of computer programs, and the electrical terminal box 72 enables these facilities to be remote controlled.

It will be understood that the invention is not restricted to the described and illustrated embodiments thereof and that modifications and changes can be made within the scope of the following claims.

## Claims

1. A multi-facility connection arrangement comprising a terminal connector device (11) with first connecting means (30''', 31''', 32''', 33') and a terminal box (15) with corresponding second connection means (62, 63, 64, 66), which terminal box (15) is adapted to be mounted on a vehicle and connected to pipes and conductors of a heating system, an electric system and a pressure system of the vehicle, and which terminal connector device (11) is arranged to be connected to corresponding sources of hot liquid, electric current and compressed air on a stationary plant **characterised in,** that the terminal connector device (11) is arranged to be inserted into the terminal box (15), which terminal box (15) contains a microswitch (70) adapted to be activated upon insertion of the terminal connector device (11), which microswitch (70) when activated is arranged to activate at least one piston/cylinder device (67), which at least one piston/cylinder device (67) when activated is arranged to move the terminal connector device (11) and thereby bring the first connecting means (30''', 31''', 32''',33') into active connection with the corresponding second connecting means (62, 63, 64, 66) and thereby connect the vehicle systems to the corresponding sources on the stationary plant.

2. An arrangement according to Claim 1, **characterised in** that the terminal connector device (11) has pivotally mounted thereon an activator (41) which is provided with an externally accessible handgrip (42) and which can be locked in a position in which the microswitch (70) is activated and locked in its activated state.

3. An arrangement according to Claim 1, **characterised in** that the microswitch (70) is adapted to deliver a control signal to a solenoid valve (71) upon activation of the activator (41), such as to activate the piston/cylinder device or devices (67).

4. An arrangement according to any one of Claims 1-3, **characterised in** that the microswitch (70) is connected electrically to an electrical terminal box (72) for controlling different signal commands and the functions to which they are directed, which functions include the activation of at least one temperature regulating facility and activation of a vehicle ignition locking facility.

## Patentansprüche

1. Anschlußvorrichtung für mehrere Einrichtungen, umfassend eine Anschlußsteckverbindungsvorrichtung (11) mit ersten Anschlußmitteln (30"', 31"', 32"', 33') und einen Anschlußkasten (15) mit entsprechenden zweiten Anschlußmitteln (62, 63, 64, 66), wobei der Anschlußkasten (15) dafür eingerichtet ist, an einem Fahrzeug angebracht zu werden und an Rohre und Leiter eines Heizsystems, eines elektrischen Systems und eines Drucksystems des Fahrzeugs angeschlossen zu werden, und wobei die Anschlußsteckverbindungsvorrichtung (11) dafür vorgesehen ist, an entsprechende Quellen für heißes Wasser, elektrischen Strom und Druckluft in einer ortsfesten Anlage angeschlossen zu werden, dadurch gekennzeichnet, daß die Anschlußsteckverbindungsvorrichtung (11) dafür vorgesehen ist, in den Anschlußkasten (15) eingeführt zu werden, wobei der Anschlußkasten (15) einen Mikroschalter (70) enthält, der dafür eingerichtet ist, nach Einführung der Anschlußsteckverbindungsvorrichtung (11) aktiviert zu werden, wobei der Mikroschalter (70) dafür vorgesehen ist, bei Aktivierung wenigstens eine Kolben/Zylinder-Vorrichtung (67) zu aktivieren, wobei die wenigstens eine Kolben/Zylinder-Vorrichtung (67) dafür vorgesehen ist, bei Aktivierung die Anschlußsteckverbindungsvorrichtung (11) zu bewegen und dadurch die ersten Anschlußmittel (30"', 31"', 32"', 33') in wirksame Verbindung mit den entsprechenden zweiten Anschlußmitteln (62, 63, 64, 66) zu bringen und dadurch die Fahrzeugsysteme an die entsprechenden Quellen der ortsfesten Anlage anzuschließen.

2. Vorrichtung nach Anspruch 1, dadurch gekennzeichnet, daß die Anschlußsteckverbindungsvorrichtung (11) einen darauf schwenkbar montierten Aktivator (41) aufweist, der mit einem außen zugänglichen Handgriff (42) versehen ist und der in einer Position arretiert werden kann, in welcher der Mikroschalter (70) aktiviert und in seinem aktivierten Zustand festgehalten wird.

3. Vorrichtung nach Anspruch 1, dadurch gekennzeichnet, daß der Mikroschalter (70) dafür eingerichtet ist, nach Aktivierung des Aktivators (41) ein Steuersignal an ein Magnetventil (71) zu liefern, derart daß die Kolben/Zylinder-Vorrichtung oder -Vorrichtungen (67) aktiviert wird/werden.

4. Vorrichtung nach einem der Ansprüche 1 bis 3, dadurch gekennzeichnet, daß der Mikroschalter (70) elektrisch an einen elektrischen Klemmenkasten (72) angeschlossen ist, um verschiedene Signalbefehle und die Funktionen, auf die sie gerichtet sind, zu steuern, wobei die Funktionen die Aktivierung wenigstens einer Temperaturregeleinrichtung und die Aktivierung einer Fahrzeug-Zündsperrvorrichtung einschießen.

## Revendications

1. Dispositif de connexion pour installations multiples, comprenant un dispositif connecteur terminal (11) présentant des premiers moyens de connexion (30"', 31''', 32''', 33') et une boîte de raccordement (15) avec des seconds moyens de connexion (62, 63, 64, 66) correspondants, lequel boîtier de raccordement (15) est destiné à être monté sur un véhicule et à être relié à des tuyaux et à des conducteurs d'un système de chauffage, d'un système électrique et d'un système de pression du véhicule, tandis que le dispositif connecteur terminal (11) est prévu pour être relié à des sources correspondantes de liquide chaud, de courant électrique et d'air comprimé sur du matériel à poste fixe, **caractérisé en ce que** le dispositif connecteur terminal (11) est destiné à être inséré dans la boîte de raccordement (15), ladite boîte de raccordement (15) contenant un microrupteur (70) qui est propre à être actionné lors de l'introduction du dispositif connecteur terminal (11), ledit microrupteur (70) étant prévu pour actionner, lorsqu'il est mis en fonction, au moins un dispositif à piston et cylindre (67), ledit au moins un dispositif à piston et cylindre (67) étant destiné, lorsqu'il est mis en fonction, à déplacer le dispositif connecteur terminal (11) et à ainsi amener les premiers moyens de connexion (30''', 31''', 32''', 33') à l'état de liaison active avec les seconds moyens de connexion (62, 63, 64, 66) correspondants pour ainsi relier les systèmes du véhicule aux sources correspondantes situées sur le matériel à poste fixe.

2. Dispositif selon la revendication 1, **caractérisé en ce que** le dispositif connecteur terminal (11) comporte, monté de manière pivotante sur lui, un actionneur (41) qui est pourvu d'une manette (42), accessible depuis l'extérieur et pouvant être bloquée dans une position, dans laquelle le microrupteur (70) est mis en fonction et verrouillé à l'état de fonctionnement.

3. Dispositif selon la revendication 1, **caractérisé en ce que** le microrupteur (70) est propre à fournir un signal de commande à une électrovanne (71) lors de l'actionnement de l'actionneur (41), de manière à actionner le ou les dispositif(s) à piston et cylindre (67).

4. Dispositif selon l'une quelconque des revendications 1 à 3, **caractérisé en ce que** le microrupteur (70) est électriquement relié à une boîte de raccordement électrique (72) pour la commande des différents signaux d'instructions et des fonctions qu'ils concernent, lesquelles fonctions comprennent la mise en fonction d'au moins une installation de régulation de température et la mise en fonction d'une installation de verrouillage d'allumage du véhicule.
